(19)

Europäisches Patentamt
European Patent Office
Office européen des brevets

(11) **EP 4 495 570 A1**

(12) **EUROPEAN PATENT APPLICATION**
published in accordance with Art. 153(4) EPC

(43) Date of publication:
**22.01.2025 Bulletin 2025/04**

(21) Application number: **23770559.5**

(22) Date of filing: **07.03.2023**

(51) International Patent Classification (IPC):
**G01M 13/04** *(2019.01)*   **F16C 19/52** *(2006.01)*

(52) Cooperative Patent Classification (CPC):
**F16C 19/52; G01M 13/04**

(86) International application number:
**PCT/JP2023/008685**

(87) International publication number:
**WO 2023/176603 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2022   JP 2022041692**

(71) Applicant: **NSK Ltd.**
**Tokyo 141-8560 (JP)**

(72) Inventors:
• **KOSUGI, Daichi**
  **Fujisawa-shi, Kanagawa 251-8501 (JP)**
• **IWASE, Shunsuke**
  **Fujisawa-shi, Kanagawa 251-8501 (JP)**
• **MARUYAMA, Taisuke**
  **Fujisawa-shi, Kanagawa 251-8501 (JP)**
• **SHIMIZU, Yasuyuki**
  **Fujisawa-shi, Kanagawa 251-8501 (JP)**

(74) Representative: **Grünecker Patent- und
Rechtsanwälte
PartG mbB
Leopoldstraße 4
80802 München (DE)**

(54) **STATE DIAGNOSIS METHOD, STATE DIAGNOSIS DEVICE, AND PROGRAM**

(57)    A state diagnosis method for a bearing device including a plurality of rolling bearings which are electrically connected, the method including: measuring an impedance of the plurality of rolling bearings as a whole by applying a voltage to the plurality of rolling bearings by an AC power supply while changing a frequency; deriving an impedance of each of the plurality of rolling bearings by fitting the measured impedance based on an equivalent circuit in which the plurality of rolling bearings are connected in series; and a diagnosis step of diagnosing a state of each of the plurality of rolling bearings based on the derived impedance of each of the plurality of rolling bearings.

*FIG. 1*

EP 4 495 570 A1

## Description

TECHNICAL FIELD

The present invention relates to a state diagnosis method, a state diagnosis device, and a program.

BACKGROUND ART

In the related art, in a rolling device such as a bearing device, a configuration for lubricating rotation of the rolling device by using a lubricant (for example, lubricating oil or grease) is widely used. On the other hand, a rotating component such as a bearing device is periodically subjected to state diagnosis, so that damage or wear is detected at an early stage and occurrence of a failure or the like of the rotating component is suppressed.

In the rolling device using the lubricant, it is required to appropriately detect an internal state in order to diagnose an operating state of the rolling device. On the other hand, depending on the type of the device, there is a device that supports a rotating operation using a plurality of bearing devices. For example, Patent Literature 1 discloses a configuration in which a state of a lubricating film of a rolling bearing is determined in a non-contact state with respect to a rotating ring or a rolling element for a device having a configuration in which a rotary shaft is supported by two rolling bearings.

CITATION LIST

PATENT LITERATURE

Patent Literature 1: JP2007-239779A

SUMMARY OF INVENTION

TECHNICAL PROBLEM

On the other hand, in the method of Patent Literature 1, measurement is performed using a total value of capacitances of the two rolling bearings. However, in the method of Patent Literature 1, the state of each rolling bearing cannot be grasped. However, there is a demand for a device including a plurality of rolling bearings to grasp the state of each rolling bearing with fewer measurements.

In view of the above problems, an object of the present invention is to provide a method capable of diagnosing, in a device including a plurality of rolling bearings, a state of each of the rolling bearings based on measurement results of the plurality of rolling bearings.

SOLUTION TO PROBLEM

In order to solve the above problems, the present invention has the following configuration. That is, a state diagnosis method for a bearing device including a plurality of rolling bearings which are electrically connected, the method including:

a measurement step of measuring an impedance of the plurality of rolling bearings as a whole by applying a voltage to the plurality of rolling bearings by an AC power supply while changing a frequency;
a derivation step of deriving an impedance of each of the plurality of rolling bearings by fitting the impedance measured in the measurement step based on an equivalent circuit in which the plurality of rolling bearings are connected in series; and
a diagnosis step of diagnosing a state of each of the plurality of rolling bearings based on the impedance of each of the plurality of rolling bearings derived in the derivation step.

Another aspect of the present invention has the following configuration. That is, a state diagnosis device for a bearing device including a plurality of rolling bearings which are electrically connected, the device including:

a measurement unit configured to measure an impedance of the plurality of rolling bearings as a whole by applying a voltage to the plurality of rolling bearings by an AC power supply while changing a frequency;
a derivation unit configured to derive an impedance of each of the plurality of rolling bearings by fitting the impedance measured by the measurement unit based on an equivalent circuit in which the plurality of rolling bearings are connected in series; and
a diagnosis unit configured to diagnose a state of each of the plurality of rolling bearings based on the impedance of each of the plurality of rolling bearings derived by the derivation unit.

Another aspect of the present invention has the following configuration. That is, a program for causing a computer to execute:

a measurement step of measuring an impedance of the plurality of rolling bearings as a whole by applying a voltage to the plurality of rolling bearings by an AC power supply while changing a frequency;
a derivation step of deriving an impedance of each of the plurality of rolling bearings by fitting the impedance measured in the measurement step based on an equivalent circuit in which the plurality of rolling bearings are connected in series; and
a diagnosis step of diagnosing a state of each of the plurality of rolling bearings based on the impedance of each of the plurality of rolling bearings derived in the derivation step.

ADVANTAGEOUS EFFECTS OF INVENTION

According to the present invention, it is possible to diagnose, in a device including a plurality of rolling bearings, a state of each rolling bearing based on measurement results of the plurality of rolling bearings.

BRIEF DESCRIPTION OF DRAWINGS

[FIG. 1] FIG. 1 is a diagram illustrating a configuration example of a device to which a state diagnosis method according to an embodiment of the present invention may be applied.
[FIG. 2] FIG. 2 is a conceptual diagram illustrating an equivalent circuit around a lubricant in a rolling bearing according to the embodiment of the present invention.
[FIG. 3] FIG. 3 is a schematic diagram illustrating an equivalent circuit of the rolling bearing according to the embodiment of the present invention.
[FIG. 4] FIG. 4 is a flowchart of state diagnosis processing according to the embodiment of the present invention.
[FIG. 5A] FIG. 5A is a graph illustrating a result of the state diagnosis processing according to the embodiment of the present invention.
[FIG. 5B] FIG. 5B is a graph illustrating a result of the state diagnosis processing according to the embodiment of the present invention.
[FIG. 5C] FIG. 5C is a graph illustrating a result of the state diagnosis processing according to the embodiment of the present invention.
[FIG. 6A] FIG. 6A is a graph illustrating a result of the state diagnosis processing according to the embodiment of the present invention.
[FIG. 6B] FIG. 6B is a graph illustrating a result of the state diagnosis processing according to the embodiment of the present invention.
[FIG. 6C] FIG. 6C is a graph illustrating a result of the state diagnosis processing according to the embodiment of the present invention.
[FIG. 7A] FIG. 7A is a graph illustrating a result of the state diagnosis processing according to the embodiment of the present invention.
[FIG. 7B] FIG. 7B is a graph illustrating a result of the state diagnosis processing according to the embodiment of the present invention.

DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problem of the present invention. In the drawings, the same components are denoted by the same reference numerals, thereby showing a correspondence relation therebetween.

<First Embodiment>

Hereinafter, a first embodiment of the present invention will be described. A measurement method according to the present invention may be applied to a device including a plurality of rolling bearings that perform a rolling behavior while being lubricated by a lubricant. Examples of a type of the rolling bearing to which a diagnosis method according to the present invention may be applied include a deep groove ball bearing, an angular contact ball bearing, a tapered roller bearing, a cylindrical roller bearing, and a self-aligning roller bearing.

[Device Configuration]

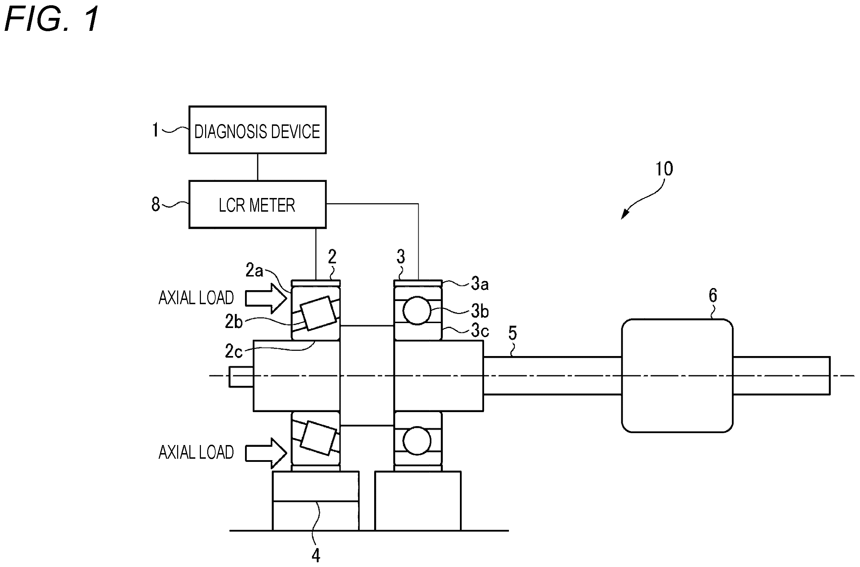

FIG. 1 is a schematic configuration diagram illustrating an example of an overall configuration of a system to which a state diagnosis method according to the present embodiment may be applied. FIG. 1 illustrates a diagnosis device 1 in which the state diagnosis method according to the present embodiment is used, an LCR meter 8, and a bearing device 10 as a diagnosis target. The configuration illustrated in FIG. 1 is an example, and a different configuration may be used depending on the diagnosis target or the like.

The bearing device 10 includes two rolling bearings. FIG. 1 illustrates an example of a combination of a roller bearing 2 and a ball bearing 3. The roller bearing 2 and the ball bearing 3 are provided around a rotary shaft 5 and are configured to rotate the rotary shaft 5. In the roller bearing 2 and the ball bearing 3, friction in each bearing is reduced by a predetermined lubrication method. The lubrication method is not particularly limited, and for example, grease lubrication, oil lubrication, or the like is used and supplied to the inside of each rolling bearing. A type of the lubricant is also not particularly limited. The lubricant used in the rolling bearings may be different.

The roller bearing 2 includes an outer ring 2a, a plurality of rollers 2b as rolling elements, and an inner ring 2c. The ball bearing 3 includes an outer ring 3a, a plurality of balls 3b as rolling elements, and an inner ring 3c. In the present embodiment, the inner ring of each rolling bearing is a rolling ring, and the outer ring is a fixed ring, or vice versa.

A linear guide 4 is used to guide movement of the roller bearing 2 in a rotary shaft direction. In the present embodiment, it is assumed that the roller bearing 2 is loaded with an axial load along the rotary shaft direction, and the roller bearing 2 is movable along the linear guide 4 according to the axial load.

A motor 6 is a motor for driving, and supplies power by rotation to the rotary shaft 5. The LCR meter 8 is electrically connected to the roller bearing 2 and the ball bearing 3, and at this time, the LCR meter 8 also functions as an AC power supply for the roller bearing 2 and the ball bearing 3.

The diagnosis device 1 operates as a detection device capable of executing a detection method according to the present embodiment. At the time of diagnosis, the diagnosis device 1 instructs the LCR meter 8, as inputs, an angular frequency $\omega$ of the AC power supply and an AC voltage V, and acquires, as outputs corresponding thereto, an impedance |Z| of the roller bearing 2 and the ball bearing 3 (|Z| indicates an absolute value of Z) and a phase angle $\theta$ from the LCR meter 8. Then, the diagnosis device 1 monitors oil films of the lubricant in the roller bearing 2 and the ball bearing 3 using the above-described values. Details of the state diagnosis method will be described later.

The diagnosis device 1 may be implemented by, for example, an information processing device including a control device (not illustrated), a storage device (not illustrated), and an output device (not illustrated). The control device may include a central processing unit (CPU), a micro processing unit (MPU), a digital single processor (DSP), and a dedicated circuit. The storage device includes volatile and nonvolatile storage media such as a hard disk drive (HDD), a read only memory (ROM), and a random access memory (RAM), and may input and output various kinds of information in response to an instruction from the control device. The output device includes a speaker, a light, or a display device such as a liquid crystal display, and performs notification to an operator in response to the instruction from the control device. A notification method by the output device is not particularly limited, and for example, may be an auditory notification by voice or a visual notification by screen output. The output device may be a network interface having a communication function, and may perform a notification operation by transmitting data to an external device (not illustrated) via a network (not illustrated). For example, when state diagnosis is performed based on a detection result, a notification content here is not limited to a notification when an abnormality is detected, and may include a notification indicating that the bearing device 10 is normal.

[Electric Circuit]

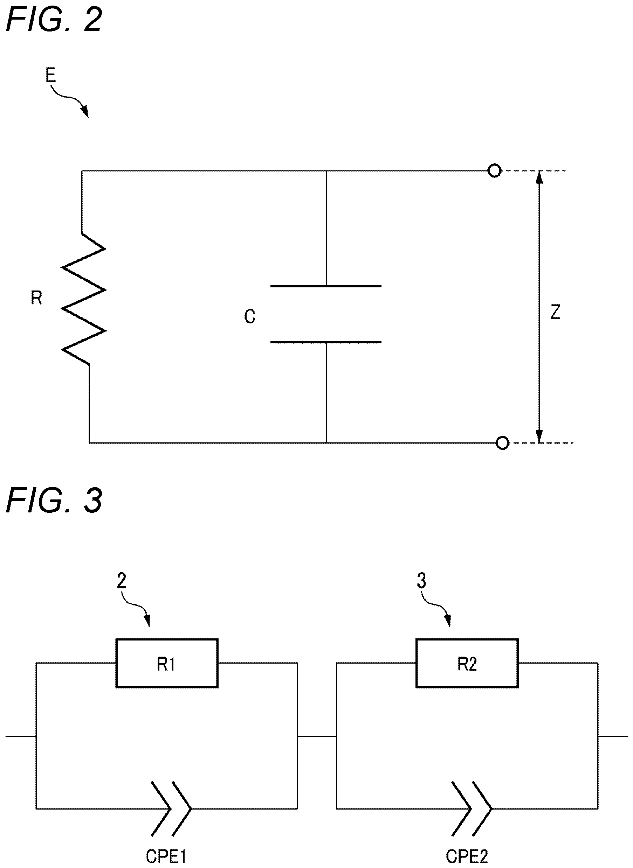

FIG. 2 is a diagram illustrating an electrically equivalent electric circuit around the lubricant in the rolling bearing. An electric circuit E has a configuration in which a capacitor C made of a lubricant and a resistor R caused by peripheral elements of the capacitor C are connected in parallel. The peripheral elements here include a rolling element (roller, ball, and the like), an inner ring, an outer ring, and the like which constitute a rolling bearing. An impedance of the electric circuit E is denoted by Z. Here, the AC voltage V applied to the electric circuit E, a current I flowing through the electric circuit E, and a complex impedance Z of the entire electric circuit E are expressed by the following Formulas (1) to (3).

$$V = |V|\exp(j\omega t)\dots(1)$$

$$I = |I|\exp(j(\omega t - \theta))\dots(2)$$

$$Z = V/I = |V/I|\exp(j\theta) = |Z|\exp(j\theta)\dots(3)$$

j: imaginary number
$\omega$: angular frequency of voltage
t: time
$\theta$: phase angle (shift in phase between voltage and current)

In the present embodiment, the diagnosis is performed by applying electrochemical impedance spectroscopy. Since the electrochemical impedance spectroscopy is a known method, a detailed description thereof is omitted here, but the electrochemical impedance spectroscopy is a method of distinguishing an impedance behavior of a solution electrode/solution interface.

As illustrated in FIG. 1, two rolling bearings are used in the present embodiment. The rolling bearings can be regarded as a circuit in which the rolling bearings are connected in series when viewed from the LCR meter 8. FIG. 3 illustrates an electrically equivalent electric circuit of the roller bearing 2 and the ball bearing 3. In the present embodiment, a constant phase element (CPE; pseudo capacitance) is used assuming the surface roughness of the rolling element and the inner and outer rings.

Here, a resistor of the roller bearing 2 is denoted by R1, and CPE is denoted by CPE1. Similarly, a resistor of the ball bearing 3 is denoted by R2, and CPE is denoted by CPE2.

The CPE is a circuit element including elements of a capacitor and a resistor caused by unevenness or non-uniformity of an electrode surface. A time constant of the CPE is not determined to be one. An impedance of the CPE is expressed by the following Formula (4). When p = 1, the CPE is a capacitor based on a CPE constant $T_{CPE}$, and when p = 0, the CPE is a resistor of which a resistance value is $1/T_{CPE}$. A R-CPE parallel circuit illustrates a collapsed semicircular shape, and a degree of collapse depends on p.

[Math. 1]

$$Z_{CPE} = \cfrac{1}{\left(j\,2\pi f\right)^{p} T_{CPE}} \quad \cdot\cdot\cdot(4)$$

$Z_{CPE}$: impedance
j: imaginary number

$\pi$: Pi
f: frequency
$T_{CPE}$: CPE constant
P: CPE index

In the present embodiment, the oil film behavior of each rolling bearing is separately determined by applying the impedance spectroscopy based on the equivalent circuit illustrated in FIG. 3. The LCR meter 8 is electrically connected to an outer ring which is a fixed ring of each rolling bearing, and is not in contact with the rotary shaft 5.

[Processing Flow]

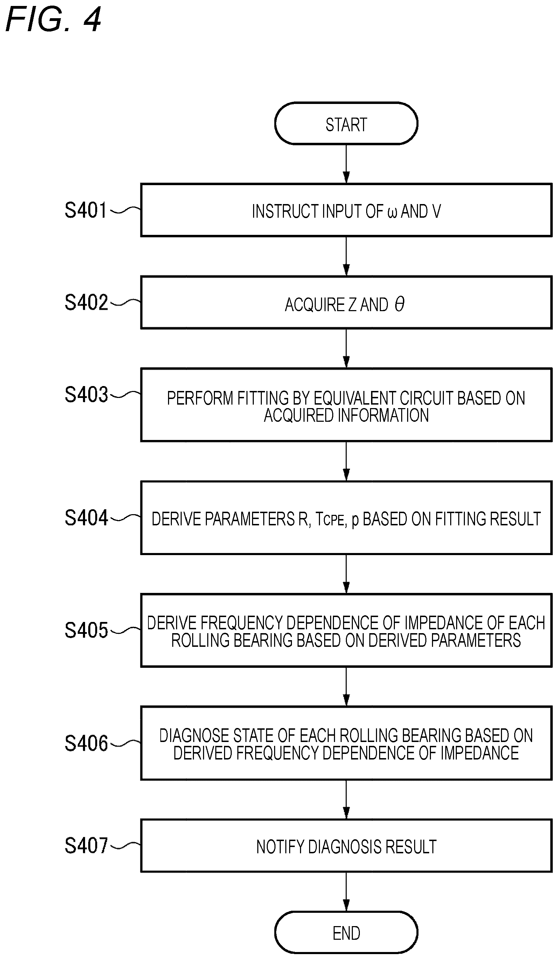

FIG. 4 is a flowchart of the state diagnosis processing according to the present embodiment. The processing is executed by the diagnosis device 1, and may be implemented by, for example, the control device (not illustrated) included in the diagnosis device 1 reading out a program for implementing the processing according to the present embodiment from the storage device (not illustrated) and executing the program. A part of the fitting and the derivation of parameters in the following processing may be implemented by using a function of general-purpose software.

In S401, the diagnosis device 1 controls the LCR meter 8 such that the power of the AC voltage V of the angular frequency $\omega$ is applied to the bearing device 10 (that is, roller bearing 2 and ball bearing 3) using an AC power supply (not illustrated) included in the LCR meter 8. Accordingly, the AC voltage V of the angular frequency $\omega$ is applied to the lubricant in each rolling bearing.

In S402, the diagnosis device 1 acquires the impedance |Z| and the phase angle $\theta$ from the LCR meter 8 as an output with respect to the input instructed in S101. That is, the LCR meter 8 outputs the impedance |Z| and the phase angle $\theta$ to the diagnosis device 1 as the measurement result of the bearing device 10 with respect to the AC voltage V of the angular frequency $\omega$ which is the input.

In S403, the diagnosis device 1 performs fitting to a formula based on the equivalent circuit illustrated in FIG. 3 based on information on the impedance |Z| and the phase angle $\theta$ acquired in S402 and the AC voltage V of the angular frequency $\omega$ instructed in S401.

In S404, the diagnosis device 1 can specify each parameter in Formula (1) corresponding to the equivalent circuit illustrated in FIG. 3 from the result of the fitting in S403. The parameters specified here are R, $T_{CPE}$ (CPE constant), and p (CPE index). At this time, the parameters corresponding to the respective rolling bearings connected in series are derived.

In S405, the diagnosis device 1 derives frequency dependence of the impedance Z of each of the plurality of rolling bearings using the parameters derived in S404. An example of deriving the frequency dependence of the impedance Z will be described later.

In S406, the diagnosis device 1 diagnoses the state of the lubricant in each rolling bearing based on a result of the frequency dependence of the impedance Z derived in S405. A diagnosis content here is not particularly limited, and for example, the lubricating oil film thickness h and the metal contact ratio $\alpha$ may be derived by a method described in Japanese Patent No. 6729633 by the applicant of the present invention. A predetermined threshold may be set for the lubricating oil film thickness h and the metal contact ratio $\alpha$, and normality or abnormality may be diagnosed by comparison with the threshold. In addition, a plurality of thresholds may be set according to the urgency of the abnormality, and the urgency may be diagnosed by comparison with the thresholds. In addition, a threshold or an evaluation standard may be set in advance for each of the plurality of rolling bearings, and the state of each rolling bearing may be diagnosed by comparison with the threshold or the evaluation standard. Measurement accuracy according to the present embodiment when the lubricating oil film thickness h and the metal contact ratio $\alpha$ are derived will be described later as a test example.

In S407, the diagnosis device 1 notifies a user of a diagnosis result obtained in S406. A notification method here is not particularly limited, and for example, a parameter or an item determined to be abnormal may be displayed on a screen or notified by voice. Then, the processing flow ends.

[Test]

Results of tests performed using the above-described diagnosis method will be described below. Here, results of two different test conditions will be described. The test conditions are as follows. In Test 1, two rolling bearings, that is, a tapered roller bearing and a ball bearing are made into a series circuit, and the test is performed using the same lubricant (viscosity). On the other hand, in Test 2, two same ball bearings are used, and the test is performed using lubricants having different viscosities.

(Test Condition 1)

Bearing used: tapered roller bearing (name number: HR32206), ball bearing (name number: 6306)
Axial load: 300 [N]
Radial load: 0 [N]
Base oil viscosity: 47 [cSt] (40°C or lower)
Grease: urea-based
Encapsulation amount: 3.6 [g]
Rotational speed: 400 [min$^{-1}$]
AC frequency: 20 to 1,000,000 [Hz]
AC voltage: 0.2 [V]

(Test Result 1)

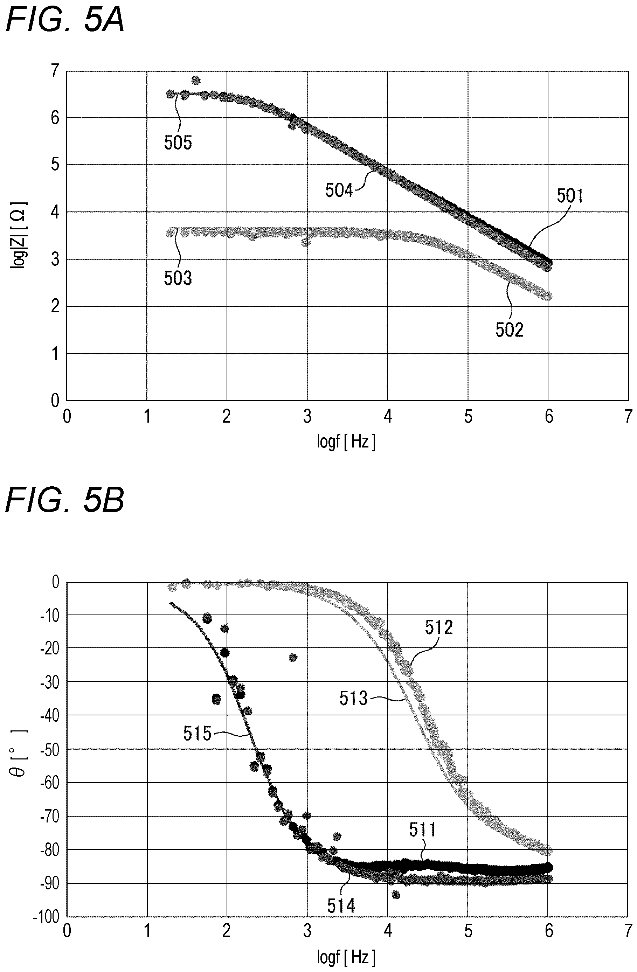

FIGS. 5A to 5C are graphs illustrating measurement results under Test Condition 1. In FIG. 5A, a horizontal axis represents the logarithm log of the frequency f [Hz], and a vertical axis represents the logarithm log of the impedance |Z| [Ω]. In FIG. 5B, a horizontal axis represents the logarithm log of the frequency f [Hz], and a vertical axis represents the phase angle θ [°]. Information on a plot 501 in FIG. 5A and a plot 511 in FIG. 5B is specified by operations of the steps S401 and S402 illustrated in FIG. 4.

In FIG. 5A, a plot 502 indicates a result of measurement performed on a single tapered roller bearing used in Test 1. A curve 503 indicates a result estimated as an estimated value for the tapered roller bearing by fitting to the circuit configuration illustrated in FIG. 3 based on the result obtained as the plot 501. The curve 503 is obtained as a result of S404 and S405 illustrated in FIG. 4. Similarly, a plot 504 indicates a result obtained by measurement performed on a single ball bearing used in Test 1. A curve 505 indicates a result estimated as an estimated value for the single ball bearing by fitting to the circuit configuration illustrated in FIG. 3 based on the result obtained as the plot 501. The curve 505 is obtained as a result of S404 and S405 illustrated in FIG. 4.

In FIG. 5B, a plot 512 indicates a result of measurement performed on the single tapered roller bearing used in Test 1. A curve 513 indicates a result estimated as an estimated value for the tapered roller bearing by fitting to the circuit configuration illustrated in FIG. 3 based on the result obtained as the plot 511. The curve 513 is obtained as a result of S404 and S405 illustrated in FIG. 4. Similarly, a plot 514 indicates a result obtained by measurement performed on the single ball bearing used in Test 1. A curve 515 indicates a result estimated as an estimated value for the single ball bearing by fitting to the circuit configuration illustrated in FIG. 3 based on the result obtained as the plot 511. The curve 515 is obtained as a result of S404 and S405 illustrated in FIG. 4.

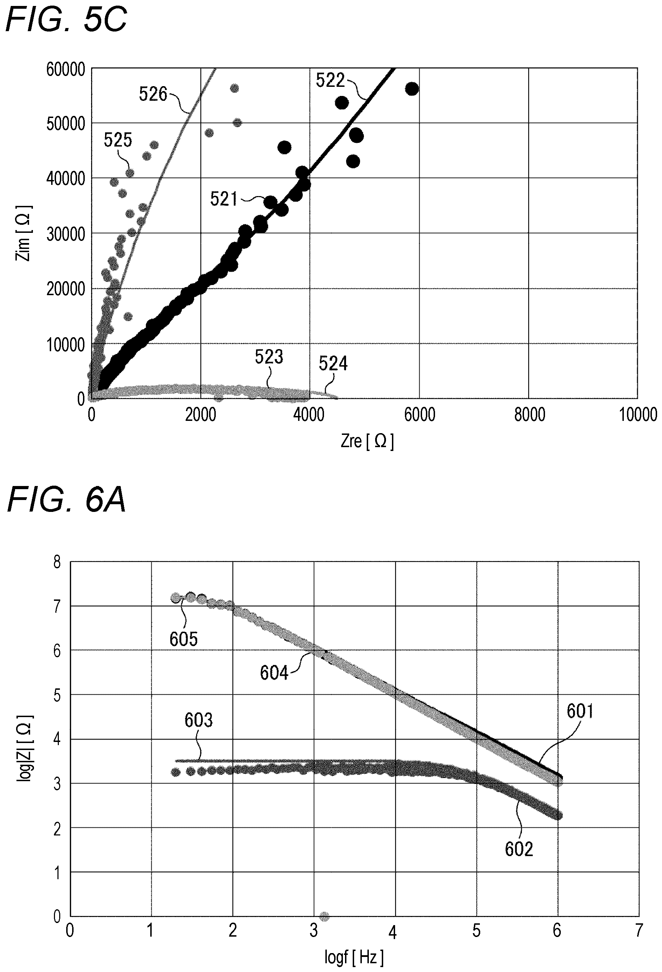

FIG. 5C is a graph illustrating results of the processing of S403 and S404 illustrated in FIG. 4. In FIG. 5C, a horizontal axis represents a real part $Z_{re}$ of the impedance Z, and a vertical axis represents an imaginary part $Z_{im}$ of the impedance Z. A plot 521 is specified by the operation of step S402. A curve 522 indicates a result of fitting using the plot 521, and is obtained in S403 of FIG. 4. A curve 524 is a curve indicating frequency dependence of the impedance of the tapered bearing used in Test 1, which is obtained by the processing of S404 and S405 in FIG. 4. A plot 523 indicates a measurement result in a case where measurement is performed on the single tapered bearing. A curve 526 is a curve indicating the frequency dependence of the impedance of the ball bearing used in Test 1, which is obtained by the processing of S404 and S405 of FIG. 4. A plot 525 indicates a measurement result in a case where measurement is performed on the single ball bearing.

In FIG. 5A, the curve 503 derived by the present method is compared with the plot 502 obtained by the measurement on a single bearing, and the curve 505 derived by the present method is compared with the plot 504 obtained by the measurement on a single bearing. Accordingly, it can be seen that in the method according to the present embodiment, substantially the same estimated value as the plot when the measurement is performed on the single bearing can be derived.

Similarly, in FIG. 5B, the curve 513 derived by the present method is compared with the plot 512 obtained by the measurement on a single bearing, and the curve 515 derived by the present method is compared with the plot 514 obtained by the measurement on a single bearing. Accordingly, it can be seen that in the method according to the present embodiment, substantially the same estimated value as the plot when the measurement is performed on the single bearing can be derived.

Similarly, in FIG. 5C, the curve 524 derived by the present method is compared with the plot 523 obtained by the measurement on a single bearing, and the curve 526 derived by the present method is compared with the plot 525 obtained by the measurement on a single bearing. Accordingly, it can be seen that in a measurement target in which different types of rolling bearings are connected in series, the measurement can be more accurately performed by the measurement method according to the present embodiment.

(Test Condition 2)

Bearing used: ball bearing (name number: 6306) $\times$ 2
Axial load: 436 [N]
Radial load: 0 [N]
Base oil viscosity: 17 [cSt] (40°C or lower), 411 [cSt] (40°C or lower)
Grease: urea-based
Encapsulation amount: 3.6 [g]
Rotational speed: 500 [min$^{-1}$]
AC frequency: 20 to 1,000,000 [Hz]
AC voltage: 0.2 [V]

(Test Result 2)

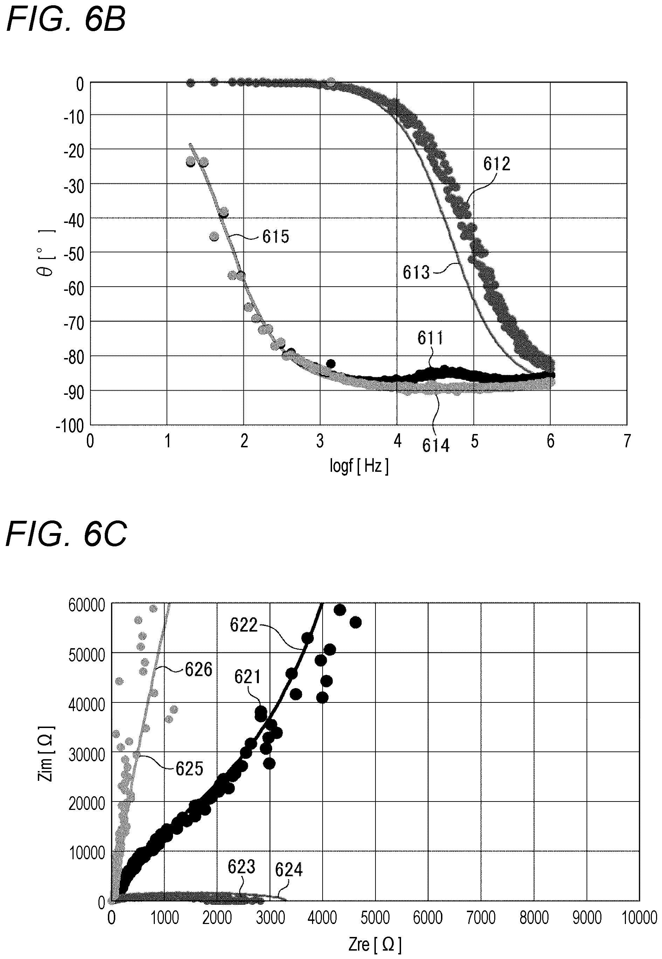

FIGS. 6A to 6C are graphs illustrating measurement results under Test Condition 2. In FIG. 6A, a horizontal axis represents the logarithm log of the frequency f [Hz], and a vertical axis represents the logarithm log of the impedance |Z| [Ω]. In FIG. 6B, a horizontal axis represents the logarithm log of the frequency f [Hz], and a vertical axis represents the phase angle θ [°]. Information on a plot 601 in FIG. 6A and a plot 611 in FIG. 6B is specified by operations of the steps S401 and S402 illustrated in FIG. 4.

In FIG. 6A, a plot 602 indicates a result of measurement performed on a single ball bearing using a lubricant having a base oil viscosity of 17 cSt between the ball bearings used in Test 2. A curve 603 indicates a result estimated as an estimated value for a single ball bearing using a lubricant having a base oil viscosity of 17 cSt by fitting to the circuit configuration illustrated in FIG. 3 based on the result obtained as the plot 601. The curve 603 is obtained as a result of S404 and S405 illustrated in FIG. 4. Similarly, a plot 604 indicates a result of measurement performed on a single ball bearing using a lubricant having a base oil viscosity of 411 cSt between the ball bearings used in Test 2. A curve 605 indicates a result estimated as an estimated value for a single ball bearing using a lubricant having a base oil viscosity of 411 cSt by fitting to the circuit configuration illustrated in FIG. 3 based on the result obtained as the plot 601. The curve 605 is obtained as a result of S404 and S405 illustrated in FIG. 4.

In FIG. 6B, a plot 612 indicates a result of measurement performed on a single ball bearing using a lubricant having a base oil viscosity of 17 cSt between the ball bearings used in Test 2. A curve 613 indicates a result estimated as an estimated value for a single ball bearing using a lubricant having a base oil viscosity of 17 cSt by fitting to the circuit configuration illustrated in FIG. 3 based on the result obtained as the plot 611. The curve 613 is obtained as a result of S404 and S405 illustrated in FIG. 4. Similarly, a plot 614 indicates a result of measurement performed on a single ball bearing using a lubricant having a base oil viscosity of 411 cSt between the ball bearings used in Test 2. A curve 615 indicates a result estimated as an estimated value for a single ball bearing using a lubricant of 411 cSt by fitting to the circuit configuration illustrated in FIG. 3 based on the result obtained as the plot 611. The curve 615 is obtained as a result of S404 and S405 illustrated in FIG. 4.

FIG. 6C is a graph illustrating results of the processing of S403 and S404 illustrated in FIG. 4. In FIG. 6C, a horizontal axis represents the real part $Z_{re}$ of the impedance Z, and a vertical axis represents the imaginary part $Z_{im}$ of the impedance Z. A plot 621 is specified by the operation of step S402. A curve 622 indicates a result of fitting using the plot 621, and is obtained in S403 of FIG. 4. A curve 624 is a curve illustrating the frequency dependence of the impedance of the ball bearing using a lubricant having a base oil viscosity of 17 cSt used in Test 2, which is obtained by the processing of S404 and S405 of FIG. 4. A plot 623 illustrates a measurement result in a case where the measurement is performed on a single ball bearing using a lubricant having a base oil viscosity of 17 cSt. A curve 626 is a curve illustrating the frequency dependence of the impedance of the ball bearing using a lubricant having a base oil viscosity of 411 cSt used in Test 2, which is obtained by the processing of S404 and S405 of FIG. 4. A plot 625 indicates a measurement result in a case where the measurement is performed on a single ball bearing.

In FIG. 6A, the curve 603 derived by the present method is compared with the plot 602 obtained by the measurement on a single bearing, and the curve 605 derived by the present method is compared with the plot 604 obtained by the measurement on a single bearing. Accordingly, it can be seen that in the method according to the present embodiment, substantially the same estimated value as the plot when the measurement is performed on a single bearing can be derived.

Similarly, in FIG. 6B, the curve 613 derived by the present method is compared with the plot 612 obtained by the measurement on a single bearing, and the curve 615 derived by the present method is compared with the plot 614 obtained by the measurement on a single bearing. Accordingly, it can be seen that in the method according to the present embodiment, substantially the same estimated value as the plot when the measurement is performed on a single bearing can be derived.

Similarly, in FIG. 6C, the curve 624 derived by the present method is compared with the plot 623 obtained by the measurement on a single bearing, and the curve 626 derived by the present method is compared with the plot 625 obtained by the measurement on a single bearing. Accordingly, it can be seen that in a measurement target in which the same rolling bearing using different types of lubricants is formed in a series structure, the measurement can be more accurately performed by the measurement method according to the present embodiment.

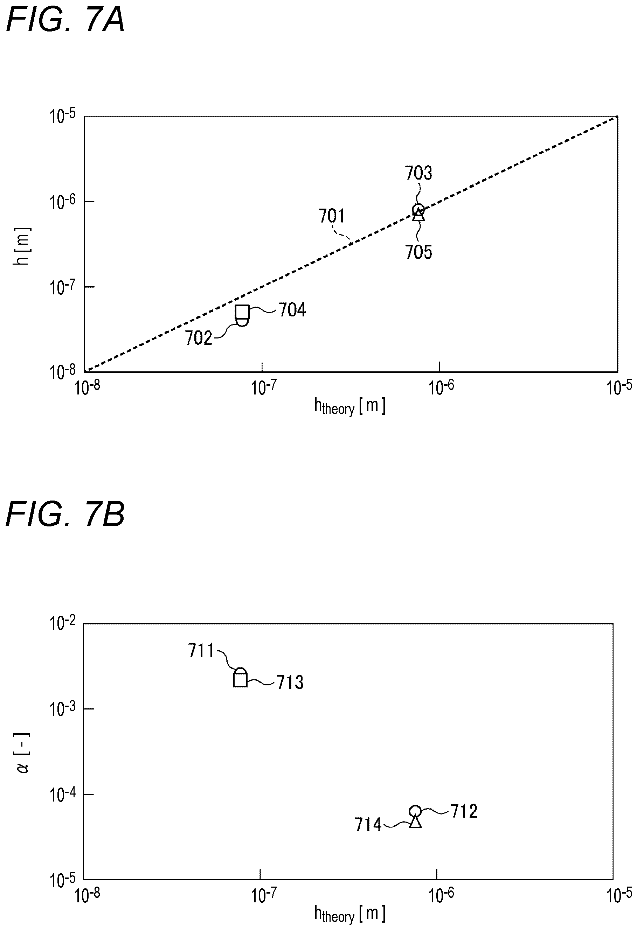

In the present embodiment, after estimating the frequency dependence of the impedance Z of each bearing in S406 of FIG. 4, the oil film thickness h and the metal contact ratio $\alpha$ of each bearing are calculated using the estimated value. A comparison result between the calculation result and the measurement result for each bearing will be described with reference to FIGS. 7A and 7B. Here, the description will be made based on the conditions of Test 2.

In FIG. 7A, a horizontal axis represents a theoretical oil film thickness $h_{theory}$ [m], and a vertical axis represents the oil film thickness h [m]. Here, the theoretical oil film thickness $h_{theory}$ indicates a value calculated using the known Hamrock & Dowson formula. In FIG. 7A, a broken line 701 indicates the theoretical oil film thickness $h_{theory}$. Plots 702 and 703 indicated by circles indicate the oil film thicknesses h derived based on the estimated values of the ball bearing of a lubricant having a base oil viscosity of 17 cSt and the ball bearing of a lubricant having a base oil viscosity of 411 cSt, which are estimated by the method according to the present embodiment, respectively. A plot 704 indicated by a square indicates the oil film thickness h derived based on a result of the measurement on the single ball bearing of a lubricant having a base oil viscosity of 17 cSt. A plot 705 indicated by a triangle indicates the oil film thickness h derived based on the result of measurement on the single ball bearing of a lubricant having a base oil viscosity of 411 cSt.

In FIG. 7B, a horizontal axis represents the theoretical oil film thickness $h_{theory}$ [m], and a vertical axis represents the metal contact ratio $\alpha$. In FIG. 7B, plots 711 and 712 indicated by circles indicate the metal contact ratios $\alpha$ derived based on the estimated values of the ball bearing of a lubricant having a base oil viscosity of 17 cSt and the ball bearing of a lubricant having a base oil viscosity of 411 cSt, which are estimated by the method according to the present embodiment, respectively. A plot 713 indicated by a square indicates the metal contact ratio $\alpha$ derived based on the result of measurement on the single ball bearing of the lubricant having the base oil viscosity of 17 cSt. A plot 714 indicated by a triangle indicates the metal contact ratio $\alpha$ derived based on the result of measurement on the single ball bearing of a lubricant having a base oil viscosity of 411 cSt.

Referring to FIGS. 7A and 7B, it can be seen that the oil film thickness h and the metal contact ratio $\alpha$ derived using the estimated values for the respective bearings estimated by the method according to the present embodiment are derived with an accuracy substantially equal to the result of measurement on a single bearing. That is, in the method according to the present embodiment, it is possible to collectively perform measurement for a plurality of bearings that must be individually measured in the method in the related art, and it is possible to obtain accuracy equivalent to that of individual measurement.

In the above example, two rolling bearings are regarded as a series circuit, but the present invention is not limited thereto. For example, even in the case of three or more rolling bearings, the method according to the present embodiment may be applied depending on characteristics of each rolling bearing and characteristics of a lubricant used in each rolling bearing.

As described above, according to the present embodiment, it is possible to diagnose, in a device including a plurality of rolling bearings, a state of each rolling bearing based on measurement results of the plurality of rolling bearings. In particular, it is possible to specify a parameter indicating electrical characteristics of a lubricant in each of the plurality of rolling bearings. Further, it is possible to easily diagnose the state of the lubricant based on the parameter indicating the electrical characteristics.

<Other Embodiments>

In the present invention, a program or an application for implementing functions of the one or more embodiments described above may be supplied to a system or a device using a network or a storage medium, and processing in which one or more processors in the system or the device may read and execute the program may be implemented.

In addition, it may be implemented by a circuit (for example, an application specific integrated circuit (ASIC) or a field programmable gate array (FPGA)) that implements one or more functions.

In this manner, the present invention is not limited to the above-described embodiments, and combinations of the respective configurations of the embodiments and changes and modifications made by those skilled in the art based on the descriptions in the description and the well-known technique are intended by the present invention and are thus also included within the scope of the present invention to be protected.

As described above, the following matters are disclosed in the present description.

(1) A state diagnosis method for a bearing device including a plurality of rolling bearings which are electrically connected, the method including:

a measurement step of measuring an impedance of the plurality of rolling bearings as a whole by applying a voltage to the plurality of rolling bearings by an AC power supply while changing a frequency;
a derivation step of deriving an impedance of each of the plurality of rolling bearings by fitting the impedance measured in the measurement step based on an equivalent circuit in which the plurality of rolling bearings are connected in series; and
a diagnosis step of diagnosing a state of each of the plurality of rolling bearings based on the impedance of each of the plurality of rolling bearings derived in the derivation step.
With this configuration, it is possible to diagnose, in a device including a plurality of rolling bearings, a state of each rolling bearing based on measurement results of the plurality of rolling bearings.

(2) The state diagnosis method according to (1), in which

the equivalent circuit includes pseudo capacitances corresponding to the plurality of rolling bearings.
With this configuration, it is possible to specify frequency dependence of the impedance of each rolling bearing based on characteristics of the pseudo capacitance of each of the plurality of rolling bearings.

(3) The state diagnosis method according to (1) or (2), in which

the plurality of rolling bearings include different types of rolling bearings, and
the plurality of rolling bearings use the same type of lubricant.
With this configuration, it is possible to diagnose the state of each rolling bearing for a device including different types of rolling bearings.

(4) The state diagnosis method according to (1) or (2), in which

the plurality of rolling bearings include the same type of rolling bearings, and
the plurality of rolling bearings use different types of lubricants.
With this configuration, it is possible to diagnose the state of each rolling bearing for a device including the same type of rolling bearing using different lubricants.

(5) A state diagnosis device for a bearing device including a plurality of rolling bearings which are electrically connected, the device including:

a measurement unit configured to measure an impedance of the plurality of rolling bearings as a whole by applying a voltage to the plurality of rolling bearings by an AC power supply while changing a frequency;
a derivation unit configured to derive an impedance of each of the plurality of rolling bearings by fitting the impedance measured by the measurement unit based on an equivalent circuit in which the plurality of rolling bearings are connected in series; and
a diagnosis unit configured to diagnose a state of each of the plurality of rolling bearings based on the impedance of each of the plurality of rolling bearings derived by the derivation unit.
With this configuration, it is possible to diagnose, in a device including a plurality of rolling bearings, a state of each rolling bearing based on measurement results of the plurality of rolling bearings.

(6) A program for causing a computer to execute:

a measurement step of measuring an impedance of the plurality of rolling bearings as a whole by applying a voltage to the plurality of rolling bearings by an AC power supply while changing a frequency;
a derivation step of deriving an impedance of each of the plurality of rolling bearings by fitting the impedance measured in the measurement step based on an equivalent circuit in which the plurality of rolling bearings are connected in series; and
a diagnosis step of diagnosing a state of each of the plurality of rolling bearings based on the impedance of each of the plurality of rolling bearings derived in the derivation step.
With this configuration, it is possible to diagnose, in a device including a plurality of rolling bearings, a state of each rolling bearing based on measurement results of the plurality of rolling bearings.

Although the embodiment and the variation thereof are described above with reference to the drawings, it is needless to mention that the present invention is not limited to these examples. It is apparent for those skilled in the art to which the present disclosure belongs that various modified examples or corrected examples are conceivable within the scope recited in the claims, and it is understood that the above falls within the technical scope of the present invention. In addition, the components described in the above embodiments may be combined in any manner without departing from the spirit of the invention.

Although various embodiments have been described above, it is needless to mention that the present invention is not limited to such embodiments. It is apparent for those skilled in the art to which the present disclosure belongs that various modified examples or corrected examples are conceivable within the scope recited in the claims, and it is understood that the above falls within the technical scope of the present invention. In addition, the components described in the above embodiments may be combined in any manner without departing from the spirit of the invention.

The present application is based on a Japanese patent application (No. 2022-041692) filed on March 16, 2022, contents of which are incorporated herein by reference.

REFERENCE SIGNS LIST

1 diagnosis device
2 roller bearing
2a outer ring
2b roller (rolling element)
2c inner ring
3 ball bearing
3a outer ring
3b ball (rolling element)
3c inner ring
4 linear guide
5 rotary shaft
6 motor
8 LCR meter
10 bearing device

## Claims

1. A state diagnosis method for a bearing device including a plurality of rolling bearings which are electrically connected, the method comprising:

a measurement step of measuring an impedance of the plurality of rolling bearings as a whole by applying a voltage to the plurality of rolling bearings by an AC power supply while changing a frequency;
a derivation step of deriving an impedance of each of the plurality of rolling bearings by fitting the impedance measured in the measurement step based on an equivalent circuit in which the plurality of rolling bearings are connected in series; and
a diagnosis step of diagnosing a state of each of the plurality of rolling bearings based on the impedance of each of the plurality of rolling bearings derived in the derivation step.

2. The state diagnosis method according to claim 1, wherein
the equivalent circuit includes pseudo capacitances corresponding to the plurality of rolling bearings.

3. The state diagnosis method according to claim 1 or 2, wherein

the plurality of rolling bearings include different types of rolling bearings, and
the plurality of rolling bearings use the same type of lubricant.

4. The state diagnosis method according to claim 1 or 2, wherein

the plurality of rolling bearings include the same type of rolling bearings, and
the plurality of rolling bearings use different types of lubricants.

5. A state diagnosis device for a bearing device including a plurality of rolling bearings which are electrically connected, the device comprising:

a measurement unit configured to measure an impedance of the plurality of rolling bearings as a whole by applying a voltage to the plurality of rolling bearings by an AC power supply while changing a frequency;
a derivation unit configured to derive an impedance of each of the plurality of rolling bearings by fitting the impedance measured by the measurement unit based on an equivalent circuit in which the plurality of rolling bearings are connected in series; and
a diagnosis unit configured to diagnose a state of each of the plurality of rolling bearings based on the impedance of each of the plurality of rolling bearings derived by the derivation unit.

6. A program for causing a computer to execute:

a measurement step of measuring an impedance of the plurality of rolling bearings as a whole by applying a voltage to the plurality of rolling bearings by an AC power supply while changing a frequency;
a derivation step of deriving an impedance of each of the plurality of rolling bearings by fitting the impedance measured in the measurement step based on an equivalent circuit in which the plurality of rolling bearings are connected in series; and
a diagnosis step of diagnosing a state of each of the plurality of rolling bearings based on the impedance of each of the plurality of rolling bearings derived in the derivation step.

FIG. 1

DIAGNOSIS DEVICE

LCR METER

AXIAL LOAD

AXIAL LOAD

*FIG. 2*

*FIG. 3*

# FIG. 4

```
                    ┌─────────────┐
                    │    START    │
                    └─────────────┘
                           │
                           ▼
S401 ──┌────────────────────────────────────────────┐
       │         INSTRUCT INPUT OF ω AND V           │
       └────────────────────────────────────────────┘
                           │
                           ▼
S402 ──┌────────────────────────────────────────────┐
       │             ACQUIRE Z AND θ                 │
       └────────────────────────────────────────────┘
                           │
                           ▼
S403 ──┌────────────────────────────────────────────┐
       │  PERFORM FITTING BY EQUIVALENT CIRCUIT      │
       │        BASED ON ACQUIRED INFORMATION        │
       └────────────────────────────────────────────┘
                           │
                           ▼
S404 ──┌────────────────────────────────────────────┐
       │ DERIVE PARAMETERS R, TCPE, p BASED ON       │
       │              FITTING RESULT                 │
       └────────────────────────────────────────────┘
                           │
                           ▼
S405 ──┌────────────────────────────────────────────┐
       │ DERIVE FREQUENCY DEPENDENCE OF IMPEDANCE    │
       │ OF EACH ROLLING BEARING BASED ON DERIVED    │
       │              PARAMETERS                     │
       └────────────────────────────────────────────┘
                           │
                           ▼
S406 ──┌────────────────────────────────────────────┐
       │ DIAGNOSE STATE OF EACH ROLLING BEARING      │
       │ BASED ON DERIVED FREQUENCY DEPENDENCE OF    │
       │              IMPEDANCE                       │
       └────────────────────────────────────────────┘
                           │
                           ▼
S407 ──┌────────────────────────────────────────────┐
       │         NOTIFY DIAGNOSIS RESULT             │
       └────────────────────────────────────────────┘
                           │
                           ▼
                    ┌─────────────┐
                    │     END     │
                    └─────────────┘
```

# FIG. 5A

# FIG. 5B

## FIG. 5C

## FIG. 6A

## FIG. 6B

## FIG. 6C

*FIG. 7A*

*FIG. 7B*

| | |
|---|---|
| **INTERNATIONAL SEARCH REPORT** | International application No. |
| | **PCT/JP2023/008685** |

**A. CLASSIFICATION OF SUBJECT MATTER**

*G01M 13/04*(2019.01)i; *F16C 19/52*(2006.01)i
FI:   G01M13/04; F16C19/52

According to International Patent Classification (IPC) or to both national classification and IPC

**B. FIELDS SEARCHED**

Minimum documentation searched (classification system followed by classification symbols)

G01M13/00-13/045; G01M99/00; F16C3/00-9/06; F16C17/00-33/66; F16C41/00-41/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-239779 A (NTN CORP.) 20 September 2007 (2007-09-20) | 1-6 |
| A | JP 2020-193968 A (NSK LTD.) 03 December 2020 (2020-12-03) | 1-6 |
| A | JP 2012-237334 A (MINEBEA CO., LTD.) 06 December 2012 (2012-12-06) | 1-6 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/008685**

| Patent document cited in search report | | | Publication date (day/month/year) | Patent family member(s) | | | Publication date (day/month/year) |
|---|---|---|---|---|---|---|---|
| JP | 2007-239779 | A | 20 September 2007 | (Family: none) | | | |
| JP | 2020-193968 | A | 03 December 2020 | (Family: none) | | | |
| JP | 2012-237334 | A | 06 December 2012 | US | 2012/0286608 | A1 | |
| | | | | CN | 102780306 | A | |

Form PCT/ISA/210 (patent family annex) (January 2015)

**EP 4 495 570 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007239779 A
- JP 6729633 B
- JP 2022041692 A